# EUROPÄISCHE PATENTANMELDUNG

(11) **EP 1 136 450 A2**
(43) Veröffentlichungstag der Anmeldung: **26.09.2001**
(21) Anmeldenummer: 01106791.5
(22) Anmeldetag: 19.03.2001
(51) Int. Cl.: C02F 11/18

(54) **Verfahren und Vorrichtung zum Behandeln organischen Materials**

(30) Priorität: 23.03.2000 DE 10014185
(71) Anmelder: BSBG Bremer Sonderabfallberatungsgesellschaft mbH, 28195 Bremen (DE)
(72) Erfinder: Setzermann, Uwe, Prof. Dr., 27751 Delmenhorst (DE); Nestler, Wolfgang, 27711 Garlstedt (DE)
(74) Vertreter: von Ahsen, Erwin-Detlef, Dipl.-Ing.

(57) **Zusammenfassung**

Verfahren zum Behandeln organischen Materials, bei dem eine wäßrige Suspension des Materials, insbesondere Klärschlamm, einer Heizanordnung (13) zugeführt, in dieser von einer ersten Temperatur (Tₑᵢₙ) auf eine höhere zweite Temperatur (Tᵣₑₐₖ) geheizt wird, und bei dem die Suspension anschließend wieder zumindest annähernd auf die erste Temperatur (Tₑᵢₙ) gekühlt wird. Bei einem bekannten Verfahren wird die Suspension längere Zeit Temperaturen über 70 °C ausgesetzt. Dadurch ergeben sich Nachteile für eine anschließende anaerobe Erzeugung von Biogas aus der Suspension. Bei einem anderen bekannten Verfahren erweist sich ein hoher Energieaufwand als nachteilig. Nach der Erfindung werden diese Nachteile dadurch vermieden, daß die Suspension von der zweiten Temperatur (Tᵣₑₐₖ) mittels Expandieren von dem zweiten Druck auf den ersten Druck gekühlt wird, und daß der bei dem Expandieren entstehende Dampf in der Heizanordnung (13) der Suspension zum Erhöhen der Temperatur zugeführt wird.

## Beschreibung

Die Erfindung betrifft ein Verfahren zum Behandeln organischen Materials, bei dem eine wässrige Suspension des Materials, insbesondere Klärschlamm, einer Heizanordnung zugeführt wird, bei dem die Suspension in der Heizanordnung von einer ersten Temperatur auf eine höhere zweite Temperatur geheizt wird, bei dem der Druck der Suspension von einem ersten Druck auf einen höheren zweiten Druck erhöht wird, bei dem der Suspension eine saure oder basische Substanz, insbesondere Ammoniak oder Ammoniakwasser, zugesetzt wird, bei dem nach einer vorgegebenen Zeit die Substanz aus der Suspension wieder entfernt wird, bei dem die Suspension von der zweiten Temperatur wieder gekühlt wird, und bei dem der Druck der Suspension wieder von dem zweiten Druck auf etwa den ersten Druck reduziert wird. Außerdem betrifft die Erfindung eine Vorrichtung zum Durchführen des Verfahrens.

Eine solches Verfahren ist aus der EP 0 818 424 A2 bekannt. Besonders in Prozessen der biologischen Abwasserreinigung entsteht bei der Umwandlung der belastenden Inhaltsstoffe Biomasse in Form von Mikroorganismenzellen. Diese entstehende Biomasse, in den Kläranlagen als Überschuß- oder Sekundärschlamm bezeichnet, stellt zunehmend ein Problem hinsichtlich der Entsorgung und Verwertung dar und wird im folgenden kurz als Klärschlamm bezeichnet.

Mit dem bekannten Verfahren lassen sich die Zellwände der Biomasse in dem Klärschlamm durch Hydrolyse weitgehend zerstören. Der so behandelte Klärschlamm kann dann der Verwertung in einem anaeroben Prozeß zur Herstellung von Biogas zugeführt werden. Bei dem bekannten Verfahren erfolgt die Hydrolyse bei Temperaturen über 120 °C und einem mittels Ammoniak eingestellten pH-Wert größer als 11. Damit bei der nachfolgenden anaeroben Biogaserzeugung eine große Biogasausbeute erreicht werden kann, darf der Klärschlamm bei der Behandlung nicht über längere Zeit Temperaturen über 65 °C ausgesetzt werden. So reduziert sich beispielsweise die Biogasausbeute bereits bei der Behandlung des Klärschlamms bei Temperaturen über 65 °C mit einer Dauer von mehr als einer Stunde. Das bekannte Verfahren schlägt deshalb die Behandlung des Klärschlamms in einem sogenannten Desintegrator mit einer Dauer von 50 bis 60 Sekunden vor. Dabei muß der Klärschlamm zunächst auf die gewünschte Temperatur über 120 °C erhitzt und anschließend wieder auf eine Temperatur unter 65 °C heruntergekühlt werden. Insbesondere muß die Temperatur vor dem Zuleiten des desintegrierten Klärschlamms zu dem anaeroben Prozeß zur Herstellung von Biogas wieder auf einen Wert von weniger als 40 °C gesenkt werden. Außerdem muß das Ammoniak aus dem Klärschlamm entfernt werden, da dieses bereits bei Konzentrationen von mehr als 300 ppm toxisch auf die für die Biogaserzeugung wichtigen anaeroben Mikroorganismen wirkt. Die vorstehend beschriebenen Prozesse bei dem bekannten Verfahren erfordern einen im Vergleich zur Biogasausbeute verhältnismäßig großen Energieaufwand. Dadurch wird das Verfahren unrentabel.

In der US 4 190 528 A ist ein Verfahren zum Behandeln von Klärschlamm beschrieben, bei dem der Klärschlamm zum Zerstören der Zellwände bei Temperaturen von 90 bis 300 °C und einem pH-Wert von 8 bis 11 durch die Anwesenheit von einer basischen Substanz einer Hydrolyse unterzogen wird. Bei diesem Verfahren sollen aus dem Schlamm natürliche Aminosäuren und Oligopeptide erhalten werden. Zur Reduzierung des Energieaufwandes wird bei diesem Verfahren ein Wärmeaustauscher verwendet, mit dem die Wärme von dem behandelten Klärschlamm auf den noch zu behandelnden Klärschlamm übertragen wird. Bei diesem bekannten Verfahren ist als Behandlungszeit 90 Minuten genannt. Das Verwenden von Wärmeaustauschern ist für kurze Behandlungszeiten ungeeignet, weil hinreichend effiziente Wärmeaustauscher, wie zum Beispiel Rohrbündel-Wärmeaustauscher, durch den Klärschlamm und dessen schlechte Fließeigenschaften leicht verstopfen. Ein weiteres Problem stellt die große Temperaturdifferenz zwischen Zulauf und Ablauf bei dem Wärmeaustauscher dar. Dies führt gerade bei Klärschlamm zu festsitzenden Ablagerungen.

Das der Erfindung zugrundeliegende Problem ist es, ein Verfahren zum Behandeln organischen Materials anzugeben, mit dem sich die Zellwände des organischen Materials zuverlässig auf eine solche Weise zerstören lassen, daß bei einer nachfolgenden anaeroben Erzeugung von Biogas eine große Biogasausbeute erreichbar ist, und bei dem nur ein geringer Energieaufwand erforderlich ist.

Das Problem wird gelöst durch ein Verfahren der eingangs genannten Art, bei dem die Suspension von der zweiten Temperatur mittels Expandieren von dem zweiten Druck auf den ersten Druck gekühlt wird, und bei dem der bei dem Expandieren entstehende Dampf in der Heizanordnung der Suspension zum Erhöhen der Temperatur zugeführt wird.

Durch das Expandieren wird die Suspension einerseits schnell und wirkungsvoll gekühlt, weil dabei die Verdampfungswärme abgeführt wird. Gleichzeitig ist eine Oberflächenwärmeübertragung nicht erforderlich, so daß sich Ablagerungen, wie Kesselstein, vermeiden lassen. Das Rückführen des gewonnenen Dampfes in die Heizanordnung und das direkte Einleiten des Dampfes dort in die Suspension führt zu einer sehr schnellen und effizienten Temperaturerhöhung. Auf diese Weise lassen sich die für eine große anschließende Biogasausbeute erforderlichen kurzen Zeiten für das Heizen und das Kühlen erreichen. Außerdem läßt sich so die für das Heizen aufgewendete Energie fast vollständig zurückgewinnen.

Eine Weiterbildung der Erfindung zeichnet sich dadurch aus, daß die saure oder basische Substanz flüchtig ist, und daß beim Zuführen des Dampfes zu der Suspension zumindest ein Teil der Substanz rückgeführt wird. Vorteilhaft dabei ist, daß bei dem Rückführen des Dampfes gleichzeitig auch die flüchtige saure basische Substanz rückgeführt wird. Bei dem Verfahren ist es dabei unerheblich, ob die Substanz vorher zugegeben wird, oder ob es sich dabei beispielsweise um bei der Zersetzung des organischen Materials gebildetes Ammoniak handelt. Die Substanz wird in jedem Fall zuverlässig entfernt.

Bei einer Weiterbildung der Erfindung erfolgt das Expandieren in einem Expansionsbehälter, aus dem der Dampf bis zu einem vorgegebenen Druck abgelassen wird. Hierbei kann sich der der Temperatur entsprechende Dampfdruck in dem Expansionsbehälter über der Suspension ausbilden. Es wird dadurch weitgehend vermieden, daß andere Bestandteile aus der Suspension mit dem Dampf mitgerissen werden.

Bei einer anderen Weiterbildung der Erfindung werden das Erhöhen des Druckes von dem ersten Druck auf den zweiten Druck, das Heizen der Suspension von der ersten Temperatur auf die zweite Temperatur und das Expandieren der Suspension von dem zweiten Druck auf den ersten Druck jeweils in mehreren Schritten durchgeführt. Mit dieser schrittweisen Durchführung läßt sich eine gute Ausbeute bei der Wärmerückführung und bei der Rückführung der sauren oder basischen Substanz, insbesondere des Ammoniaks bzw. des Ammoniakwassers, erzielen.

Es ist auch möglich, die Druckverluste durch Kompressionsmittel auszugleichen. Dadurch wird eine zuverlässige Förderung der Suspension gewährleistet.

Bei einer Ausführungsform der Erfindung wird zumindest ein Teil der verbleibenden Wärmeenergie der behandelten Suspension in einem Wärmeaustauscher auf die zugeführte Suspension übertragen. Mit dem Rückführen des Dampfes läßt sich ein Abkühlen der Suspension im wesentlichen bis auf die Siedetemperatur von Wasser erzielen. Für den weiteren Wärmeaustausch läßt sich ein konventioneller Wärmeaustauscher vorteilhaft verwenden. Die zu übertragende Wärme ist in diesem Fall verhältnismäßig gering. Außerdem hat die Suspension dann bereits eine verhältnismäßig niedrige Temperatur, wodurch die beim Einsatz eines Wärmeaustauschers auftretenden Probleme keinen wesentlichen Einfluß mehr haben.

Vorzugsweise verbleibt die Suspension nach dem Zusetzen der sauren oder basischen Substanz für die vorgegebene Zeit zur Desintegration in einem Desintegrator. Auf diese Weise lassen sich die für die Zerstörung der Zellwände des organischen Materials erforderlichen Prozeßbedingungen genau und zuverlässig einhalten.

Die vorgegebene Zeit kann dabei eine Minute betragen. Diese Zeit reicht aus, um bei geeigneten Prozeßbedingungen die Desintegration durchzuführen.

Eine Weiterbildung der Erfindung zeichnet sich dadurch aus, daß die Zeit für die gesamte Behandlung weniger als 30 Minuten, insbesondere 20 bis 25 Minuten, beträgt. Mit dieser Behandlungszeit läßt sich bei einer anschließenden anaeroben Erzeugung von Biogas aus der behandelten Suspension eine besonders gute Biogasausbeute erreichen.

Bei einer anderen Weiterbildung der Erfindung wird durch das Zusetzen der Substanz ein pH-Wert der Suspension auf einen Wert größer als 11 eingestellt. Insbesondere ein Wert von 11,5 ist dabei von Vorteil. Bei diesem pH-Wert werden die Zellwände des organischen Materials zuverlässig zerstört.

Vorzugsweise wird die aus der Suspension entfernte saure oder basische Substanz rückgeführt. Dadurch verringert sich die benötigte Menge der Substanz im wesentlichen auf die beim Beginn des Verfahrens benötigte Menge. Anschließend müssen nur noch die Verluste ersetzt werden.

Bei einer Weiterbildung der Erfindung wird die basische Substanz aus der Suspension durch Heizen in einem Desorber zumindest weitgehend entfernt. Dieses Heizen erfolgt vorzugsweise bei Bedingungen bezüglich des Druckes und der Temperatur, bei denen der Austrag von Wasserdampf weitgehend unterbleibt. Auf diese Weise läßt sich ein großer Anteil der Substanz in kurzer Zeit aus der Suspension entfernen.

Wenn dabei die Suspension in dem Desorber indirekt über Dampf geheizt wird, läßt sich anderweitig abgeführte Abwärme sinnvoll verwenden. Diese Form der Energiezufuhr ist besonders effizient und kostengünstig.

Vorzugsweise hat der Dampf dabei eine Temperatur von 220 bis 230 °C. Dies führt zu einer besonders effizienten Abtrennung der Substanz, insbesondere des Ammoniaks oder des Ammoniakwassers, aus der Suspension.

Bei einer Weiterbildung werden durch das Heizen der Suspension in dem Desorber die gesamten Wärmeverluste ausgeglichen. In diesem Fall ist eine weitere Wärmezufuhr bei dem Verfahren nicht erforderlich.

Vorzugsweise verbleibt die Suspension beim Entfernen der Substanz für etwa 5 bis 10 Minuten in dem Desorber. In dieser Zeit läßt sich eine weitgehende Entfernung der basischen Substanz aus der Suspension erreichen. Gleichzeitig ist diese Zeit kurz genug, damit keine nachteiligen Effekte auf die Biogasausbeute bei einer späteren anaeroben Erzeugung von Biogas aus der Suspension auftreten.

Bei einer Weiterbildung der Erfindung hat die zweite Temperatur einen Wert von 150 bis 200 °C. In diesem Temperaturbereich lassen sich die Zellwände des organischen Materials schnell und zuverlässig zerstören.

Bei einer weiteren Ausführungsform der Erfindung werden beim Behandeln entstehende nicht kondensierbare Gase abgeleitet. Da bei dem Verfahren bereits geringe Mengen Biogase entstehen, läßt sich durch dieses Abführen ein Ansteigen des Systemdrucks vermeiden. Außerdem können diese Gase einer Biogasverwertungsanlage zugeführt werden.

Im folgenden wird ein Ausführungsbeispiel der Erfindung anhand der Zeichnungen näher beschrieben. Es zeigen:
- Fig. 1: eine Vorrichtung zum Behandeln organischen Materials als ein Ausführungsbeispiel,
- Fig. 2: einen Desorber der Vorrichtung von Fig. 1 in einer vergrößerten Darstellung,
- Fig. 3: eine graphische Darstellung der Ausbeute bei der anaeroben Erzeugung von Biogas, abhängig von der Behandlungszeit bei erhöhter Temperatur, und
- Fig. 4: eine graphische Darstellung der Ausbeute bei der anaeroben Erzeugung von Biogas, abhängig von der Temperatur bei der Behandlung.

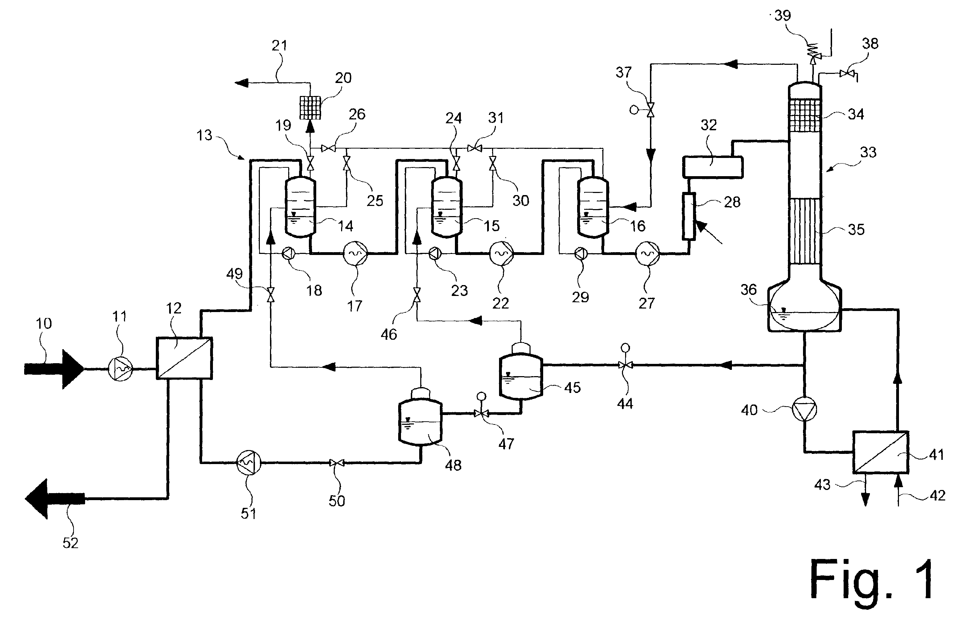

Fig. 1 zeigt eine Vorrichtung zum Behandeln organischen Materials als ein Ausführungsbeispiel der Erfindung. Bei der in Fig. 1 gezeigten Vorrichtung ist durch einen Pfeil 10 die Zufuhr einer wässrigen Suspension organischen Materials, insbesondere die Zufuhr von aus einer aeroben Reinigungsstufe einer kommunalen Abwasserreinigungsanlage kommendem Überschußschlamm dargestellt, der im folgenden als Klärschlamm bezeichnet wird. Der Klärschlamm wird einer Förderpumpe 11 zugeführt, die mit einem Wärmeaustauscher 12 in Verbindung steht. Geeignet Wärmeaustauscher sind beispielsweise Doppelrohr-, Spiral- oder Plattenwärmeaustauscher. Der Wärmeaustauscher 12 ist durch eine Leitung mit einer Heizanordnung 13 verbunden.

Die Heizanordnung 13 hat einen ersten Mischbehälter 14, einen zweiten Mischbehälter 15 und einen dritten Mischbehälter 16. Der Zulauf des ersten Mischbehälters 14 ist mit dem Wärmeaustauscher 12 verbunden. Der Ablauf des ersten Mischbehälters 14 ist über eine Förderpumpe 17 mit dem Zulauf des zweiten Mischbehälters 15 verbunden. Außerdem ist der Ablauf des ersten Mischbehälters 14 über eine Umwälzpumpe 18 mit seinem Zulauf verbunden. Der erste Mischbehälter 14 hat in seinem oberen Bereich einen Gasauslaß, der über ein Ventil 19 mit einem Tropfenabscheider 20 verbunden ist. Der Tropfenabscheider 20 ist mit einer Gasableitung 21 verbunden, die in Fig. 1 mit einem Pfeil angedeutet ist.

Der Auslaß des zweiten Mischbehälters 15 ist über eine Förderpumpe 22 mit dem Einlaß des dritten Mischbehälters 16 verbunden. Außerdem ist der Auslaß des zweiten Mischbehälters 15 über eine Umwälzpumpe 23 mit seinem Einlaß verbunden. Ein Gasauslaß im oberen Bereich des zweiten Mischbehälters 15 ist mit einem Ventil 24 verbunden. Das Ventil 24 ist mit einem Ventil 25 und einem weiteren Ventil 26 verbunden. Das Ventil 25 ist mit einem Gaseinlaß des ersten Mischbehälters 14 verbunden. Das Ventil 26 ist mit dem Tropfenabscheider 20 verbunden.

Der Auslaß des dritten Mischbehälters 16 ist über eine Förderpumpe 27 mit einer Dosiereinheit 28 verbunden. Außerdem steht der Auslaß des dritten Mischbehälters 16 über eine Umwälzpumpe 29 mit seinem Einlaß in Verbindung. Ein Gasauslaß im oberen Bereich des dritten Mischbehälters 16 ist mit einem Ventil 30 und einem weiteren Ventil 31 verbunden. Das Ventil 30 ist außerdem mit dem Gaseinlaß des zweiten Mischbehälters 15 verbunden. Das Ventil 31 steht über das Ventil 26 mit dem Tropfenabscheider 20 in Verbindung.

Die Dosiereinheit 28 ist mit einem Behälter 32 verbunden, der im folgenden als Desintegrator 32 bezeichnet wird. Der Desintegrator 32 ist mit einem Desorber 33 verbunden.

Der Desorber 33 hat einen Tropfenabscheider 34, eine Kolonnensäule 35 und einen Sumpf 36. Die Kolonnensäule 35 ist mit einer Schüttung zur Vergrößerung der Oberfläche gefüllt. Ein Auslaß des Desorbers 33 in dessen oberen Bereich ist über ein Regelventil 37 mit dem dritten Mischbehälter 16 verbunden. Ein weiterer Auslaß im oberen Bereich des Desorbers 33 ist mit einem Ventil 38 verbunden. Außerdem ist im oberen Bereich des Desorbers 33 ein Überdruckventil 39 angeordnet.

Der Durchmesser des Sumpfes 36 ist etwa 1,8 bis 3 mal größer als der der Kolonnensäule 35. Der Sumpf 36 ist über eine Umwälzpumpe 40 mit dem Eingang eines Wärmeaustauschers 41 verbunden. Der Ausgang des Wärmeaustauschers 41 ist direkt mit dem Sumpf 36 verbunden. Der Wärmeaustauscher 41 ist außerdem mit einem in Fig. 1 nicht dargestellten Dampferzeuger verbunden, wie dies in der Fig. 1 durch die Pfeile 42, 43 angedeutet ist. Der Sumpf 36 ist über ein Regelventil 44 mit einem ersten Expansionsbehälter 45 verbunden.

Ein Auslaß im oberen Bereich des ersten Expansionsbehälters 45 ist über ein Ventil 46 mit dem zweiten Mischbehälter 15 verbunden. Ein weiterer Auslauß im unteren Bereich des ersten Expansionsbehälters 45 ist über ein Regelventil 47 mit einem zweiten Expansionsbehälter 48 verbunden.

Ein Auslaß im oberen Bereich des zweiten Expansionsbehälters 48 ist über ein Ventil 49 mit dem ersten Mischbehälter 14 verbunden. Ein weiterer Auslaß im unteren Bereich des zweiten Expansionsbehälters ist über ein Ventil 50 mit einer Förderpumpe 51 verbunden. Der Ausgang der Förderpumpe 51 ist mit dem Wärmeaustauscher 12 verbunden. Die Schlammabfuhr von dem Wärmeaustauscher 12 ist in Fig. 1 mit einem Pfeil 52 angedeutet.

Der dem in Fig. 1 gezeigten System bei 10 zugeführte Klärschlamm hat eine Temperatur Tₑᵢₙ von 15°C und wird von der Förderpumpe 11 durch den Wärmeaustauscher 12 in den ersten Mischbehälter 14 gedrückt. In dem Wärmeaustauscher 12 wird der Klärschlamm auf eine Temperatur von etwa 80°C erhitzt. Der Klärschlamm in dem ersten Mischbehälter 14 wird durch die Umwälzpumpe 18 umgewälzt. Außerdem wird dem Klärschlamm in dem ersten Mischbehälter 14 heißer Wasserdampf mit einer Temperatur von etwa 100 °C und einem Absolutdruck von etwa 1 bar zugeführt, wie nachfolgend noch näher beschrieben. Der Klärschlamm wird anschließend von der Förderpumpe 17 aus dem ersten Mischbehälter 14 in den zweiten Mischbehälter 15 gefördert und dabei gleichzeitig auf einen Druck von etwa 5 bar komprimiert. Ähnlich wie in dem ersten Mischbehälter 14 wird der Klärschlamm auch in dem zweiten Mischbehälter 15 durch die Umwälzpumpe 23 umgewälzt. In dem zweiten Mischbehälter 15 wird dem Klärschlamm heißer Dampf mit einer Temperatur von etwa 145 °C und einem Druck von etwa 5 bar zugeführt, wie ebenfalls nachfolgend noch näher beschrieben. Der auf diese Weise weiter erhitzte Klärschlamm wird durch die Förderpumpe 22 aus dem zweiten Mischbehälter 15 in den dritten Mischbehälter 16 gefördert. Gleichzeitig wird durch die Förderpumpe 22 der Druck auf etwa 10 bar angehoben. In dem dritten Mischbehälter 16 wird der Klärschlamm durch die Umwälzpumpe 29 umgewälzt. Außerdem wird der Klärschlamm durch Zufuhr von Dampf auf eine Temperatur von etwa 180 °C bei einem Druck von etwa 10 bar erhitzt. Dies ist die Reaktionstemperatur Tᵣₑₐₖ für die nachfolgende Desintegration. Nicht bei diesen Bedingungen kondensierbare Gase lassen sich aus dem dritten Mischbehälter 16 durch die beiden Ventile 31 und 26 zu dem Tropfenabscheider 20 und von dort zu der Gasableitung 21 leiten. Eine andere Möglichkeit besteht darin, die nicht kondensierbaren Gase aus dem dritten Mischbehälter 16 durch das Ventil 30 in den zweiten Mischbehälter 15 zu leiten. Aus dem zweiten Mischbehälter 15 lassen sich nicht kondensierbare Gas entweder durch das Ventil 24 und das Ventil 26 in den Tropfenabscheider 20 und von dort in die Gasableitung 21 leiten. Diese nicht kondensierbaren Gase können aus dem zweiten Mischbehälter 15 auch durch das Ventil 24 und das Ventil 25 in den ersten Mischbehälter 14 geleitet werden, aus dem sie dann durch das Ventil 19 zu dem Tropfenabscheider 20 und von dort in die Gasableitung 21 geleitet werden können.

Der heiße Klärschlamm wird aus dem dritten Mischbehälter 16 durch die Förderpumpe 27 zu der Dosiereinheit 28 befördert. In der Dosiereinheit 28 wird dem heißen Klärschlamm dann die notwendige Menge einer basischen Substanz, insbesondere Ammoniak, zugesetzt, damit der pH-Wert des Klärschlammes auf einen Wert größer als 11 ansteigt. Insbesondere wird der pH-Wert des Klärschlammes auf einen Wert von 11,5 eingestellt. Nach einer Einfahrphase ist keine nennenswerte weitere Zugabe von Ammoniak erforderlich. Dann müssen nur noch die Verluste ersetzt werden. Der Klärschlamm gelangt dann aus der Dosiereinheit 28 in den Desintegrator 32. Die Aufenthaltszeit des Klärschlammes in dem Desintegrator 32 beträgt etwa 1 min. In dieser Zeit werden die Zellwände des organischen Materials im Klärschlamm bei der hohen Temperatur von etwa 180 °C und dem hohen Druck von etwa 10 bar sowie dem pH-Wert von 11,5 wirksam zerstört. Anschließend gelangt der so behandelte Klärschlamm aus dem Desintegrator 32 in den Desorber 33, wie nachfolgend noch näher beschrieben.

Der Klärschlamm wird in dem Sumpf 36 des Desorbers 33 durch die Umwälzpumpe 40 umgewälzt. Dabei wird der Klärschlamm von der Umwälzpumpe 40 durch den Wärmeaustauscher 41 gedrückt. Der von der Umwälzpumpe 40 geförderte Volumenstrom ist dabei 10 mal so groß wie der Klärschlammdurchsatz durch den Desorber 33. Zum Heizen des Klärschlammes wird dem Wärmeaustauscher 41 von einem nicht in Fig. 1 dargestellten Dampferzeuger Heißdampf zugeführt, wie dies durch die Pfeile 42, 43 andeutet ist. Durch Einstellen der Temperatur des Dampfes kann die Menge entstehenden Ammoniak-Wasserdampfes gesteuert werden. Bei einer Dampftemperatur von etwa 220 bis 230 °C werden circa 4 bis 6 % der dem Desorber 33 zugeführten Klärschlammenge zu einem Ammoniak-Wasserdampf-Gemisch verdampft. Bei einer Aufenthaltszeit von etwa 8 bis 12 Minuten in dem Desorber 33 können dabei 80 bis 95 % des Ammoniaks aus dem Klärschlamm abgetrieben werden. Das entstehende Ammoniak-Wasserdampf-Gemisch wird über das Regelventil 37 dem dritten Mischbehälter 16 wieder zugeführt. Dadurch wird der Klärschlamm in dem dritten Mischbehälter 16 auf die Temperatur Tᵣₑₐₖ von 180 °C geheizt. Außerdem wird der pH-Wert des Klärschlammes so bereits in dem dritten Mischbehälter 16 auf einen Wert von nahezu 11,5 angehoben. Durch dieses Führen des Ammoniaks im Kreislauf müssen mit der Dosiereinheit 28 lediglich die bei der Behandlung auftretenden Verluste an Ammoniak ersetzt werden. Bei dem in Fig. 1 gezeigten Ausführungsbeispiel beträgt die Aufenthaltszeit des Klärschlammes in jedem der Mischbehälter 14, 15, 16 etwa 2 bis 3 Minuten. Da der Klärschlamm in dem dritten Mischbehälter 16, wie vorstehend erwähnt, bereits die gewünschte Temperatur, den gewünschten Druck und den gewünschten pH-Wert hat, kann auf den Desintegrator 32 auch verzichtet werden. In diesem Fall erfolgt die Desintegration der organischen Bestandteile des Klärschlammes in dem dritten Mischbehälter 16.

Über das Ventil 38 lassen sich in dem Desorber 33 in geringen Mengen entstehende Gase, wie zum Beispiel Faulgase, ableiten. Diese Gase können zum Beispiel in die Biogasleitung eines Anaerobreaktors einer Kläranlage eingeleitet werden. Das Überdruckventil 39 sorgt dafür, daß kein gefährlicher Überdruck in dem Desorber 33 entstehen kann. Der bereits weitgehend von dem Ammoniak befreite Klärschlamm gelangt aus dem Sumpf 36 des Desorbers 33 über das Regelventil 44 in den ersten Expansionsbehälter 45. Dabei läßt sich die Klärschlammenge mit dem Regelventil 44 einstellen. Über das Ventil 46 wird der Wasserdampf aus dem ersten Expansionsbehälter 45 bis auf einen Druck von etwa 5 bar abgelassen. Dieser Wasserdampf wird dem zweiten Mischbehälter 15 zum Heizen des Klärschlammes zugeführt. Durch das Ablassen des Dampfes wird der Klärschlamm in dem ersten Expansionsbehälter 45 auf eine Temperatur von etwa 145 °C gekühlt. Der dem ersten Expansionsbehälter 45 zugeführte Klärschlamm wird tangential entlang einer Wandfläche eingeleitet. Auf diese Weise ergibt sich eine große Oberfläche zum Verdampfen von Wasserdampf. Außerdem wird in dem ersten Expansionsbehälter 45 ein Großteil des noch in dem Klärschlamm verbliebenen Ammoniaks ausgetrieben und gemeinsam mit dem Wasserdampf über das Ventil 46 in den zweiten Mischbehälter 15 eingeleitet.

Der Klärschlamm gelangt aus dem ersten Expansionsbehälter 45 über das Regelventil 47 in den zweiten Expansionsbehälter 48. Der Klärschlamm wird ebenfalls nahezu tangential in den zweiten Expansionsbehälter 48 eingeleitet. Der Wasserdampf wird aus dem zweiten Expansionsbehälter 48 über das Ventil 49 in den ersten Mischbehälter 14 zum Heizen eingeleitet. Dabei wird die Temperatur des Klärschlammes in dem zweiten Expansionsbehälter 48 auf einen Wert von etwa 100 °C durch ein Absenken des Druckes auf einen Wert von etwa 1 bar gesenkt.

Gemeinsam mit dem Wasserdampf wird hier auch der Rest des in dem Klärschlamm befindlichen Ammoniaks abgetrieben und in den ersten Mischbehälter 14 eingeleitet. Anschließend gelangt der Klärschlamm durch das Ventil 50 und die Förderpumpe 51 in den Wärmeaustauscher 12. Der Klärschlamm wird in dem Wärmeaustauscher 12 auf eine Temperatur von 35 bis 40 °C abgekühlt, wobei er seine Wärmeenergie an den bei 10 zugeführten frischen Klärschlamm abgibt. Bei 52 wird der desintegrierte Klärschlamm abgeführt.

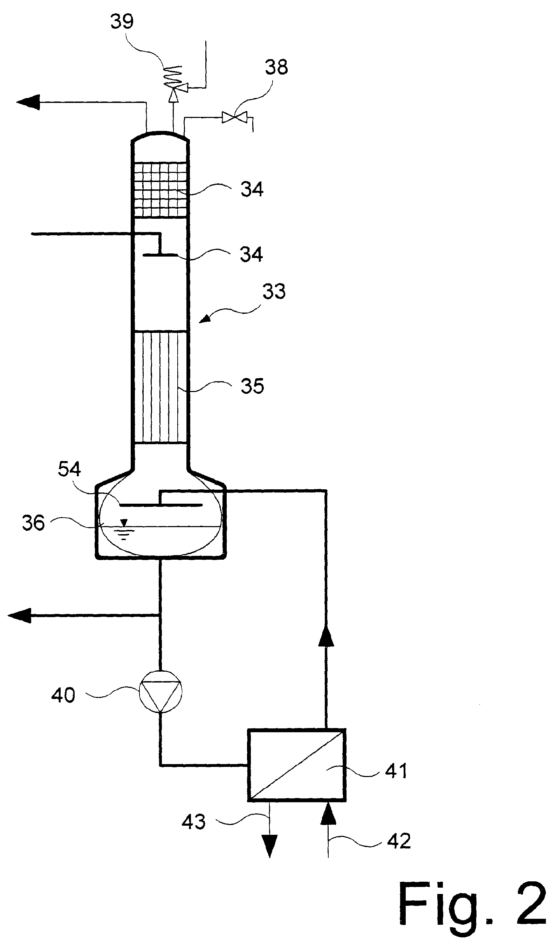

Fig. 2 zeigt einen vergrößerte Darstellung des Desorbers 33 von Fig. 1. Gleiche Elemente haben dabei die gleichen Bezugszeichen. Der desintegrierte Klärschlamm wird dem Desorber 33 über einen Verteiler 53 zugeführt. Der Klärschlamm gelangt dann durch die Kolonnensäule 35 in den Sumpf 36. Der in dem Wärmeaustauscher 41 geheizte Klärschlamm wird über einen Verteiler 54 in den Sumpf 36 zurückgeleitet. In der Kolonnensäule 35 strömt der Klärschlamm nach unten in den Sumpf 36, während gleichzeitig das im Sumpf 36 erzeugte Ammoniak-Wasserdampf-Gemisch in der Kolonnensäule 35 aufwärts strömt. Der Druck in dem Desorber 33 wird abhängig von der Klärschlammtemperatur so gewählt, daß nur geringe Mengen Wasserdampf erzeugt werden.

Durch das Verdampfen des Ammoniak-Wasserdampf-Gemisches schäumt der Klärschlamm in dem Sumpf 36 stark auf. Die nachteiligen Auswirkungen dieser Schaumbildung lassen sich einerseits durch den gegenüber der Kolonnensäule 35 vergrößerten Durchmesser des Sumpfes reduzieren. Einen wesentlichen Beitrag zur Schaumreduzierung liefert außerdem die Zufuhr des Klärschlamms über den Verteiler 54 in den Sumpf 36. Der in Fig. 2 gezeigte Desorber 33 läßt sich auch für andere Einsatzzwecke verwenden. Er läßt sich immer dann vorteilhaft verwenden, wenn eine flüchtige Substanz aus einer wäßrigen Suspension, insbesondere Schlamm, entfernt werden soll.

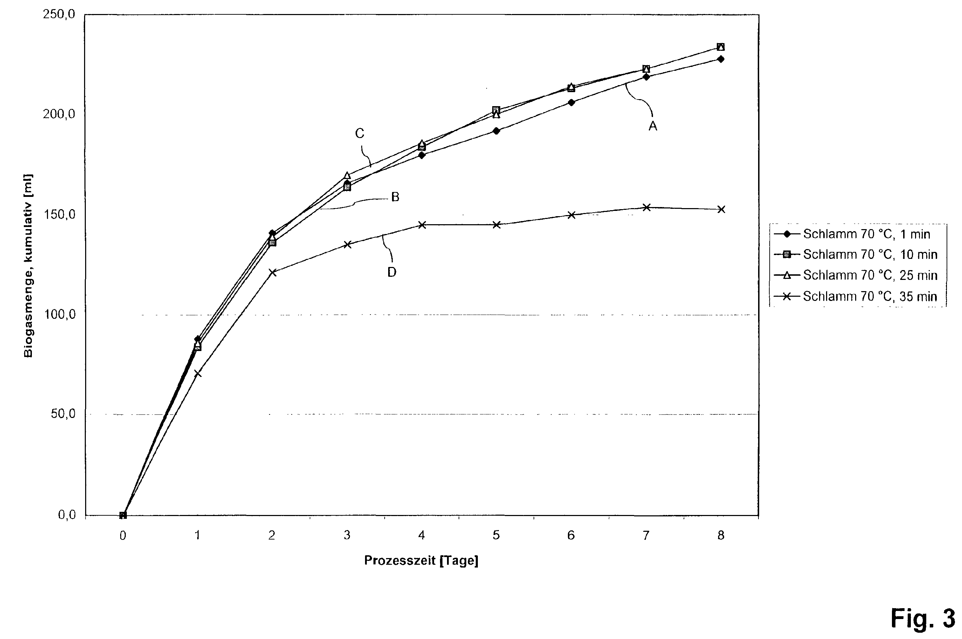

Fig. 3 zeigt eine grafische Darstellung der Ausbeute der anaeroben Erzeugung von Biogas abhängig von der Behandlungszeit bei einer Temperatur von 70 °C. Auf der Abszisse ist dabei in Fig. 3 die Prozeßzeit in Tagen aufgetragen. Auf der Ordinate ist in Fig. 3 die Biogasausbeute in Liter pro kg organische Trockensubstanz angegeben, die sich nachfolgend anaerob erzeugen ließ. Die Kurve A ergibt sich bei einer Verweildauer des Klärschlamms bei einer Temperatur von 70 °C von 1 Minute. Bei der Kurve B wurde der Klärschlamm für eine Zeit von 10 Minuten auf eine Temperatur von 70 °C geheizt. Die Kurve C entspricht einer Behandlung des Klärschlammes bei einer Temperatur von 70 °C für 25 Minuten. Bei der Kurve D wurde der Klärschlamm für 35 Minuten auf eine Temperatur von 70 °C geheizt. Wie der Fig. 3 zu entnehmen ist, ist die durch die Kurven A, B, C wiedergegebene Biogasausbeute ungefähr gleich. Dagegen ist die Biogasausbeute bei der Kurve D nach einer Prozeßzeit von 8 Tagen um nachezu 1/3 geringer als bei A, B, C.

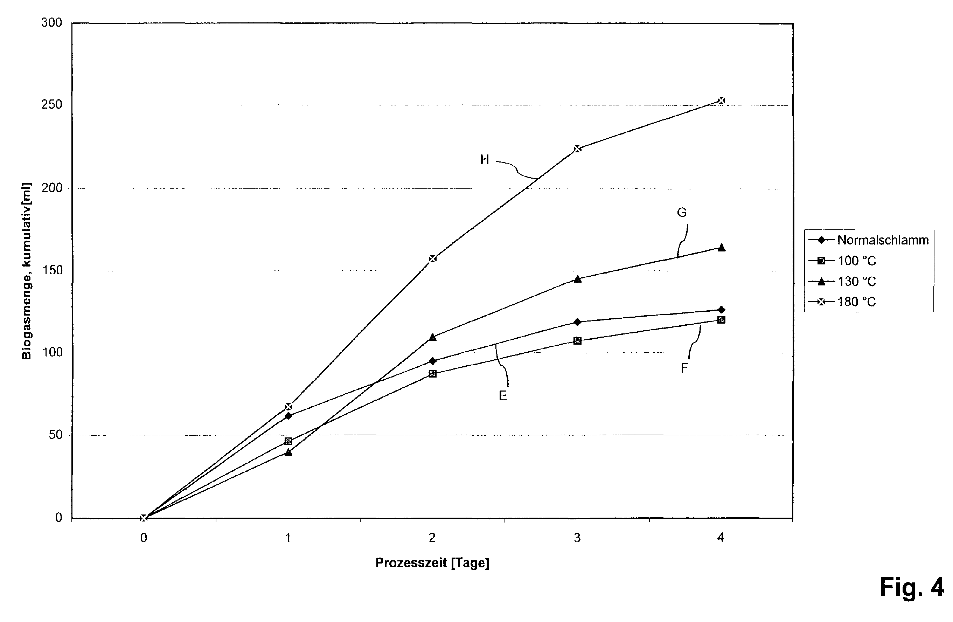

Fig. 4 zeigt eine grafische Darstellung der Biogasausbeute, die sich abhängig von der Temperatur bei der Desintegration nachfolgend anaerob erzeugen läßt. Auf der Abzisse ist in Fig. 4 die Prozeßzeit in Tagen für die anaerobe Erzeugung von Biogas aufgetragen. Auf der Ordinate ist in Fig. 4 die erzeugte Biogasausbeute in Liter pro kg organische Trockensubstanz angegeben. Die Kurve E entspricht dabei der Erzeugung von Biogas aus unbehandeltem Klärschlamm zum Vergleich. Bei der Kurve F wurde der Klärschlamm bei einer Temperatur von 100 °C und einem pH-Wert größer als 11 für eine Zeit von 1 Minute zur Desintegration behandelt. Der Verlauf der Kurve F unterscheidet sich nicht wesentlich von dem der Kurve E.

Bei der Kurve G wurde der Klärschlamm bei einer Temperatur von 130°C und einem pH-Wert größer als 11 für 1 Minute desintegriert. Nach einer Prozeßzeit von 4 Tagen ist die so gewonnene Biogasmenge deutlich größer als bei den Kurven E und F.

Bei der Kurve H wurde der Klärschlamm zur Desintegration bei einer Temperatur von 180 °C und einem pH-Wert größer als 11 für etwa 1 Minute behandelt. Nach einer Prozeßzeit von 4 Tagen ist die erzeugte Biogasmenge mehr als doppelt so groß wie bei dem unbehandelten Klärschlamm entsprechend der Kurve E.

Mit dem vorstehend beschriebenen Verfahren und der vorstehend beschriebenen Vorrichtung läßt sich eine wäßrige Suspension organischen Materials, insbesondere Klärschlamm, auf eine solche Weise behandeln, daß die Zellwände des Materials zerstört werden. Gleichzeitig läßt sich die Zeit kleiner als 30 Minuten halten, die das Material eine Temperatur größer als 70 °C hat. Nach der Erfindung läßt sich das Material schnell und mit geringem Energieaufwand heizen und anschließend wieder kühlen. Außerdem ist eine Möglichkeit beschrieben, die zur Behandlung zugegebene Substanz, insbesondere das Ammoniak, ebenfalls schnell wieder aus dem Klärschlamm zu entfernen. Durch die Rückführung des Ammoniak-Wasserdampf-Gemisches hat der behandelte Klärschlamm etwa den gleichen Trockensubstanzgehalt wie der zugeführte Klärschlamm.

Es ist bei dem angegebenen Verfahren und der angegebenen Vorrichtung auch möglich, den ersten Mischbehälter 14 bei einem geringeren Absolutdruck, beispielsweise bei etwa 70 mbar, zu betreiben. Wenn in diesem Fall die Expansion in dem zweiten Expansionsbehälter 48 ebenfalls bis auf einen Absolutdruck von etwa 70 mbar erfolgt, wird der behandelte Klärschlamm dadurch auf eine Temperatur von etwa 40 °C abgekühlt. In diesem Fall kann auf den Wärmeaustauscher 12 verzichtet werden. Außerdem ist bei dem Verfahren und der Vorrichtung auch eine andere Anzahl Expansionsbehälter und Mischbehälter.

### Bezugszeichenliste:

- 10: Klärschlammzufuhr
- 11: Förderpumpe
- 12: Wärmeaustauscher
- 13: Heizanordnung
- 14: erster Mischbehälter
- 15: zweiter Mischbehälter
- 16: dritter Mischbehälter
- 17: Förderpumpe
- 18: Umwälzpumpe
- 19: Ventil
- 20: Tropfenabscheider
- 21: Gasableitung
- 22: Förderpumpe
- 23: Umwälzpumpe
- 24: Ventil
- 25: Ventil
- 26: Ventil
- 27: Förderpumpe
- 28: Dosiereinheit
- 29: Umwälzpumpe
- 30: Ventil
- 31: Ventil
- 32: Desintegrator
- 33: Desorber
- 34: Tropfenabscheider
- 35: Kolonnensäule
- 36: Sumpf
- 37: Regelventil
- 38: Ventil
- 39: Überdruckventil
- 40: Umwälzpumpe
- 41: Wärmeaustauscher
- 42: Dampfzulauf
- 43: Dampfrücklauf
- 44: Regelventil
- 45: erster Expansionsbehälter
- 46: Ventil
- 47: Regelventil
- 48: zweiter Expansionsbehälter
- 49: Ventil
- 50: Ventil
- 51: Förderpumpe
- 52: Schlammabfuhr
- 53: Verteiler
- 54: Verteiler

## Patentansprüche

1. Verfahren zum Behandeln organischen Materials, bei dem eine wäßrige Suspension des Materials, insbesondere Klärschlamm, einer Heizanordnung (13) zugeführt wird, bei dem die Suspension in der Heizanordnung (13) von einer ersten Temperatur (Tₑᵢₙ) auf eine höhere zweite Temperatur (Tᵣₑₐₖ) geheizt wird, bei dem der Druck der Suspension von einem ersten Druck auf einen höheren zweiten Druck erhöht wird, bei dem der Suspension eine saure oder basische, insbesondere flüchtige, Substanz, insbesondere Ammoniak oder Ammoniakwasser, zugesetzt wird, bei dem nach einer vorgegebenen Zeit die basische Substanz aus der Suspension wieder entfernt wird, bei dem die saure oder basische Suspension von der zweiten Temperatur (Tᵣₑₐₖ) wieder gekühlt wird, und bei dem der Druck der Suspension wieder von dem zweiten Druck auf etwa den ersten Druck reduziert wird **dadurch gekennzeichnet, daß** die Suspension von der zweiten Temperatur (Tᵣₑₐₖ), insbesondere von 150 °C bis 200 °C, mittels Expandieren von dem zweiten Druck auf den ersten Druck gekühlt wird, und daß der bei dem Expandieren entstehende Dampf in der Heizanordnung (13) der Suspension zum Erhöhen der Temperatur zugeführt wird, insbesondere wobei beim Zuführen des Dampfes zu der Suspension zumindest ein Teil der Substanz rückgeführt wird.

2. Verfahren nach Anspruch 1, **dadurch gekennzeichnet, daß** das Erhöhen des Druckes von dem ersten Druck auf den zweiten Druck, das Heizen der Suspension von der ersten Temperatur (Tₑᵢₙ) auf die zweite Temperatur (Tᵣₑₐₖ) und das Expandieren der Suspension von dem zweiten Druck auf den ersten Druck jeweils in mehreren Schritten durchgeführt wird.

3. Verfahren nach Anspruch 1 oder 2, **dadurch gekennzeichnet, daß** Druckverluste durch Kompressionsmittel (11, 17, 22, 27, 51) ausgeglichen werden.

4. Verfahren nach einem der vorhergehenden Ansprüche, **dadurch gekennzeichnet, daß** zumindest ein Teil der verbleibenden Wärmeenergie der behandelten Suspension in einem Wärmeaustauscher (12) auf die zugeführte Suspension übertragen wird.

5. Verfahren nach einem der vorhergehenden Ansprüche, **dadurch gekennzeichnet, daß** die Suspension nach dem Zusetzen der sauren oder basischen Substanz für die vorgegebene Zeit, insbesondere 1 Minute, zur Desintegration in einem Desintegrator (32) verbleibt.

6. Verfahren nach einem der vorhergehenden Ansprüche, **dadurch gekennzeichnet, daß** die Zeit für die gesamte Behandlung weniger als 30 Minuten, insbesondere 20 bis 25 Minuten, beträgt und daß durch das Zusetzen der Substanz ein pH-Wert der Suspension auf einen Wert größer als 11 eingestellt wird.

7. Verfahren nach einem der vorhergehenden Ansprüche, **dadurch gekennzeichnet, daß** die saure oder basische Substanz aus der Suspension durch Heizen in einem Desorber (33), insbesondere in dem die Suspension indirekt mittels Dampf, welcher vorzugsweise eine Temperatur von 220 °C bis 230 °C hat, geheizt wird, zumindest weitgehend entfernt wird und die aus der Suspension entfernte saure oder basische Substanz rückgeführt wird.

8. Verfahren nach Anspruch 7, **dadurch gekennzeichnet, daß** durch das Heizen der Suspension in dem Desorber (33) die gesamten Wärmeverluste ausgeglichen werden.

9. Verfahren nach Anspruch 7 oder 8, **dadurch gekennzeichnet, daß** beim Entfernen der Substanz aus der Suspension diese für etwa 5 bis 10 Minuten in dem Desorber (33) verbleibt.

10. Verfahren nach einem der vorhergehenden Ansprüche, **dadurch gekennzeichnet, daß** beim Behandeln entstehende nicht kondensierbare Gase abgeleitet werden.

11. Vorrichtung zum Behandeln organischen Materials, mit einer Heizanordnung (13) zum Heizen einer zugeführten wäßrigen Suspension des Materials, insbesondere Klärschlamm, von einer ersten Temperatur (Tₑᵢₙ) auf eine höhere zweite Temperatur (Tᵣₑₐₖ), mit Kompressionsmitteln (17, 22, 27) zum Erhöhen des Drucks der Suspension von einem ersten Druck auf einen höheren zweiten Druck, mit einer Einbringanordnung (28) zum Zugeben einer sauren oder basischen Substanz, insbesondere von Ammoniak oder Ammoniakwasser, zu der Suspension, mit Separationsmitteln (33) zum Entfernen der Substanz aus der Suspension, mit Kühlmitteln zum Kühlen der Suspension, und mit Mitteln zum Reduzieren des Drucks der Suspension von dem zweiten Druck auf etwa den ersten Druck, **dadurch gekennzeichnet, daß** die Kühlmittel und die Mittel zum Reduzieren des Drucks eine Expansionsanordnung (45, 48) zum Expandieren der Suspension haben, die mit der Heizanordnung (13) hat, insbesondere die mindestens einen mit dem Verbindungselement verbundenen Mischbehälter (14, 15, 16), vorzugsweise dem Umwälzmittel (18, 23, 29) zum Umwälzen der Suspension darin und/oder Ableitmittel (19, 20, 21, 24, 25, 26, 30, 31) zum Ableiten nichtkondensierbarer Gase zugeordnet sind, durch ein Verbindungselement verbunden ist, und daß der bei dem Expandieren entstehende Dampf durch das Verbindungselement in der Heizanordnung (13) in die Suspension einleitbar ist.

12. Vorrichtung nach Anspruch 11, **dadurch gekennzeichnet, daß** die Expansionsanordnung mindestens einen mit dem Verbindungselement verbundenen Expansionsbehälter (45, 48) hat, insbesondere dem Mittel (44, 46, 47, 49) zum Ablassen des Dampfes bis zu einem ersten vorgegebenen Druck zugeordnet sind.

13. Vorrichtung nach Anspruch 11 oder 12, **dadurch gekennzeichnet, daß** die Heizanordnung (13) und die Kühlmittel gemeinsam einen Wärmeaustauscher (12) zum Übertragen der Wärme von der zu kühlenden Suspension auf die zu heizende Suspension haben.

14. Vorrichtung nach einem Ansprüche 11 bis 13, **dadurch gekennzeichnet, daß** die Separationsmittel einen Separationsbehälter (33), insbesondere dem Mittel (37, 39) zum Ablassen des Dampfes bis zu einem zweiten vorgegebenen Druck zugeordnet sind, haben, in dem die Suspension zum Entfernen der basischen Substanz heizbar ist.

15. Vorrichtung nach Anspruch 14, **dadurch gekennzeichnet, daß** der Separationsbehälter (33) mit der Heizanordnung (13) durch ein zweites Verbindungselement verbunden ist, durch das der abgelassene Dampf in der Heizanordnung (13) in die Suspension einleitbar ist.

16. Vorrichtung nach einem der Ansprüche 11 bis 15, **dadurch gekennzeichnet, daß** dem Separationsbehälter (33) eines oder mehrere der nachfolgenden Mittel zugeordnet ist:
a) ein Überdruckventil (39),
b) Ableitmittel (38) zum Ableiten nichtkondensierbarer Gase,
c) Umwälzmittel (40) zum Umwälzen der Suspension darin zugeordnet sind,
d) ein Sumpf (36), in dem die Suspension durch Dampf indirekt mittels eines Wärmeaustauschers (41) heizbar ist,
e) eine Füllung aus einer lockeren Füllkörperschüttung (35).
